Europäisches Patentamt

European Patent Office

Office européen des brevets

(11) Publication number: **0 072 624**
**B1**

(12) **EUROPEAN PATENT SPECIFICATION**

(45) Date of publication of patent specification: **20.03.85**

(21) Application number: **82303686.8**

(22) Date of filing: **14.07.82**

(51) Int. Cl.⁴: **B 25 J 17/02**

(54) Mechanical wrist mechanisms.

(30) Priority: **13.08.81 US 292725**

(43) Date of publication of application:
**23.02.83 Bulletin 83/08**

(45) Publication of the grant of the patent:
**20.03.85 Bulletin 85/12**

(84) Designated Contracting States:
**DE FR GB IT**

(56) References cited:
**GB-A-2 097 754**
**US-A-3 315 542**
**US-A-3 712 481**
**US-A-3 922 930**
**US-A-4 068 536**

(73) Proprietor: **GENERAL MOTORS CORPORATION**
**General Motors Building 3044 West Grand**
**Boulevard**
**Detroit Michigan 48202 (US)**

(72) Inventor: **Malarz, Antoni Joseph**
**27822 El Capitan Drive**
**Warren Michigan 48092 (US)**
Inventor: **Rieck, Gerald Charles**
**34078 Tyler Drive**
**Sterling Heights Michigan 48077 (US)**

(74) Representative: **Breakwell, John Neil Bower**
**et al**
**GM Patent Section Luton Office (F6) P.O. Box**
**No. 3 Kimpton Road**
**Luton Beds. LU2 OSY (GB)**

Courier Press, Leamington Spa, England.

## Description

This invention relates to mechanical wrist mechanisms as specified in the preamble of claim 1, for example as disclosed in US—A—4,068,536.

Prior-art devices such as those shown in the said US—A—4,068,536 and in US—A—4,218,166 permit independent movement about two axes while maintaining an unobstructed passage between a stationary base member and a work tool support member. Devices as disclosed in US—A—3,231,098 and US—A—3,315,542 do provide multi-axis mechanisms but do not provide an unobstructed passageway.

The use of an unobstructed passage has the advantage of providing protection for hoses and wires which deliver fluid and power to a work tool mounted on the support member: there is a need for a mechanical wrist mechanism which also includes provision for a third independent axis of motion (involving a unique gearing arrangement and housing structures) and nevertheless permits the use of an unobstructed passageway.

To this end a mechanical wrist mechanism in accordance with the present invention is characterised by the features specified in the characterising portion of claim 1 of the present application.

In this way selective positioning of a tool member is possible in a substantially hemispherical envelope, with three independently operable gear mechanisms providing for rotation of two intermediate housings and the tool support member respectively for establishing the said tool positioning.

In a preferred arrangement in accordance with the invention, a stationary base member rotatably supports three input drive members which are connected through respective gear trains to a first housing, to a second housing that is rotatably supported in the first housing, and to a tool support member that is rotatably supported in the second housing, and each of these housings and the support member is rotatable on its own respective axis.

In the drawing:

Figure 1 is a longitudinal section, with parts in elevation, showing one embodiment of a mechanical wrist mechanism in accordance with the present invention in one operating attitude; and

Figure 2 is a view similar to Figure 1 but showing the wrist mechanism in another operating attitude.

As is shown in the drawings, a wrist mechanism 10 includes a relatively stationary base member 12 that is adapted to be connected to a boom or support arm, not shown. The base member 12 has a longitudinal axis 14 about which a plurality of input drive shafts 16, 18 and 20 are circumferentially spaced. The drive shaft 16 is rotatably supported in a pair of needle bearings 22 and 24 and has a drive gear 26 secured thereto. The drive shaft 18 is rotatably supported in a pair of needle bearings 28 and 30 and has a drive gear 32 secured thereto. The drive shaft 20 is rotatably supported in a pair of needle bearings 34 and 36 and has a drive gear 38 secured thereto.

The base member 12 has a housing member 40 rotatably supported thereon by ball bearings 42 and 44 for rotation about the axis 14. Rotation of the housing 40 about the axis 14 is effected by means of an integral gear 46 which meshes with the drive gear 26 and therefore rotates in response to rotation of the input drive shaft 16.

The base member 12 has a sleeve member 48 rotatably supported therein on ball bearings 50 and 52 for rotation about the axis 14. The sleeve member 48 has secured thereto a gear member 54 which meshes with the drive gear 38 such that upon rotation of the input shaft 20 the sleeve member 48 will rotate about the axis 14. The sleeve member 48 also has a bevel gear 56 secured thereto.

The drive gear 32 on the input shaft 18 meshes with a gear 58 which is supported for rotation about the axis 14 on the sleeve 48 by a pair of ball bearings 60 and 62. A bevel gear 64 is secured to the gear 58.

The housing 40 has an aperture (opening) 66 disposed about an intermediate axis 68 which is angularly displaced from the axis 14 by the amount of an angle 70. The axes 68 and 14 intersect at a point 72. The aperture 66 has secured therein a pair of ball bearings 74 and 76 which rotatably support an intermediate housing 78 for rotation about the axis 68.

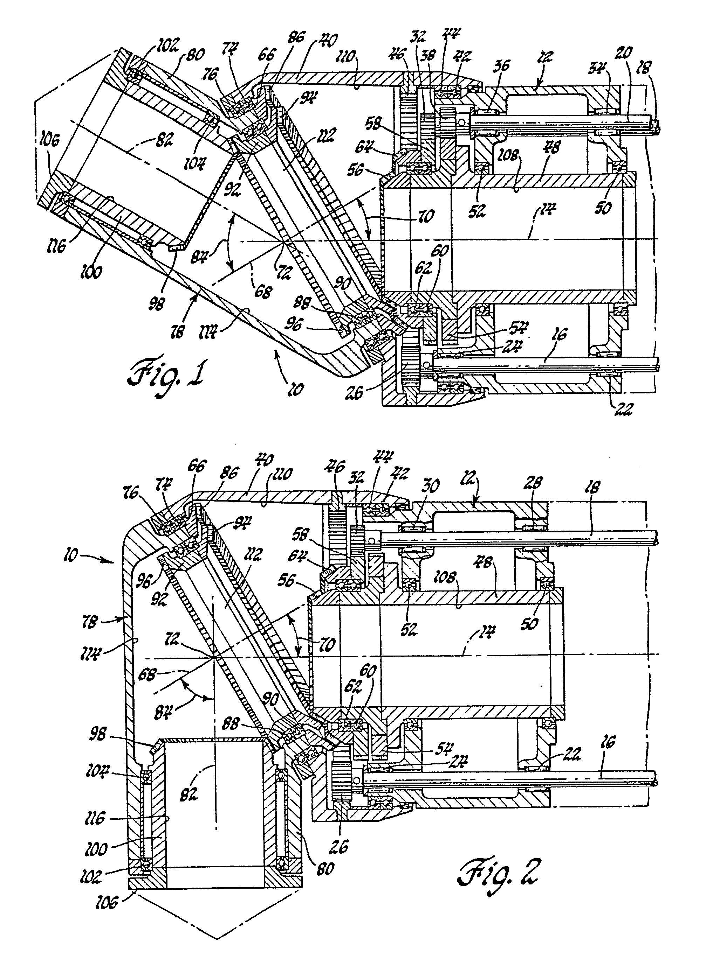

As is seen in Figure 1, the intermediate housing 78 has a sleeve portion 80 extending along an axis 82 which is angularly displaced from the axis 68 by the amount of an angle 84. The axis 82 intersects both axes 14 and 68 at the point 72, such that the three axes 14, 16 and 82 have a mutual point of intersection.

The intermediate housing 78 has secured thereto a bevel gear 86 which meshes with the bevel gear 64, such that upon rotation of the gear 32 by the input shaft 18 the intermediate housing 78 will be rotated about the axis 68.

The intermediate housing 78 has secured therein a pair of ball bearings 88 and 90 which rotatably support a bevel gear assembly 92 for rotation about the axis 68. The bevel gear assembly 92 comprises a bevel gear 94 meshing with the bevel gear 56, and a bevel gear 96. The bevel gear 96 meshes with a bevel gear 98 which is secured to or integrally formed on a tool support member 100 that is supported for rotation about the axis 82 by ball bearings 102 and 104 which are secured in the intermediate housing 78.

The tool support member 100 has secured thereto a tool mounting surface 106 which is adapted to support a work tool such as a welder or paint sprayer or other device which is useful in the assembly or finishing of a product. The tool support member 100 is rotated about the axis 82 in response to rotation of the drive shaft 20 through the meshing of the gears 38 and 54, the bevel gears 56 and 94, and the bevel gears 96 and 98.

As is seen in the drawing, the sleeve member 48 has a longitudinal passage 108 which is unobstructed along the axis 14. The housing 40 has a cavity 110 in which is disposed the bevel gear assembly 92, which has an unobstructed central aperture 112. The intermediate housing 78 has a large internal cavity 114 also surrounding a portion of the bevel gear assembly 92. The tool support member 100 has an unobstructed longitudinal opening 116 which is disposed along the axis 82. Thus an unobstructed passageway is provided from the relatively stationary base 12 to the tool mounting surface 106. This unobstructed passage can accommodate hoses and wires in a manner similar to that shown in the aforementioned United States Patent No. 4,218,166.

The axis 82 can be moved from the position shown in Figure 1 and aligned with the axis 68 by rotating the housing member 40 through an angle of 180° while maintaining the position of the intermediate housing 78 relative to the housing member 40. By rotating the housing member 40 through an angle of 360° the axis 82 will generate a cone having an angle of a measure equal to the angle 84. The axis 82 can be moved from the position shown in Figure 1 to the position shown in Figure 2 by rotating the intermediate housing 78 through an angle of 180° relative to the housing member 40, with the housing 40 maintained stationary relative to the base member 12.

From the position shown in Figure 2, the tool mounting surface 106 can be rotated through an angle of 360° by rotation of the housing member 40 while maintaining the housing 78 stationary relative thereto. By judicious rotation of the housing 78, the axis 82 can be selectively positioned in an envelope defined by outer limits which are displaced from the axis 14 by the difference of the measure of the angles 84 and 70 as one extreme, and by the measure of the sum of the angles 70 and 84 as the other extreme. Within this envelope, the tool mounting surface 106 can be rotated through an angle of substantially 360°, such that universal positioning of a tool disposed on the mounting surface 106 can be attained. The selection of the angles 78 and 84 determines the total envelope size: in the present embodiment the measure of the angle 70 is 30° and the measure of the angle 84 is 60°. Other angular measures can be used depending on the envelope size desired.

The wrist mechanism 10 is particularly useful with industrial robots which are controlled to perform various manufacturing and production processes such as spray painting and welding. The wrist mechanism 10 could be used with a clamp device operable to position a component during assembly. The rotary motion of the input shafts 16, 18 and 20 can be accomplished by any of the available well-known rotary drive devices such as electric motors, pneumatic motors or hydraulic motors. If desired, the input shafts 16, 18 and 20 could alternatively be manipulated manually. The rotation of these input shafts could if required be controlled in a desired pattern by using a computer having an appropriate program to control the rotation of the input shafts.

These devices are cited only by way of example, and it will be apparent from the foregoing description that the subject wrist mechanism can be useful in most instances in which a universal positioning device is necessary.

## Claims

1. A mechanical wrist mechanism for positioning a work tool support member, having gear units (26, 46 and 38, 54, 56, 94, 96, 98) for effecting pivoting of the work tool support member about independent rotational axes (14, 82) having a point (72) of mutual intersection on a relatively stationary base member (12), which stationary base member (12) houses three independent rotational axes (14, 68, 82) having a point of mutual intersection (72), with a first (14) and a second (68) of the said axes (14, 68, 82) being angularly fixed relative to each other, the said first axis (14) being fixed relative to the said base member (12), and a third (82) of the said axes (14, 68, 82) being movable angularly relative to the said first and second axes (14 and 68) and angularly alignable with the said second axis (68) while maintaining the point of mutual intersection (72), a pair of housing means (40 and 78) being rotatably supported on respective ones of the said first and second axes (14 and 68), characterized in that gear means (54, 56) disposed on the outer surface of a hollow sleeve shaft (48) are driven by gear means (20, 38) external to the sleeve shaft (48) and in turn drive gear means (94, 96) disposed on a hollow member (92) and meshing with gear means (98) to provide for rotation of a hollow tool support member (100), and gear means (16, 26, 46) rotatably disposed external to the hollow shaft (48) provide for rotation of one (40) of the said housing means, about their respective axes for selectively establishing the positioning of the said tool support member within a substantially hemispherical envelope, and a continuously unobstructed passage is provided between the base member and a tool mounting surface (106) on the said support member, including cavities in the said base member (12), in the said housing means (40, 78) and in the said tool support member (100), for the enclosed containment of work tool-related structures.

2. A mechanical wrist mechanism according to claim 1, characterized in that the hemispherical envelope has one extreme determined by the difference of the measure of the angles between the said first axis (14) and the third axis (82) and another extreme determined by the sum of the measure of these angles.

3. A mechanical wrist mechanism according to claim 1 or 2, characterized in that each of the gear means (26 etc. 38 etc. 32 etc.) has input drive means (16, 20, 18) extending parallel to and radially displaced from the axis (14) of the stationary base member (12), and a gear member (46, 54, 58) in each gear means has its rotary axis coincident with the said axis (14).

## Revendications

1. Mécanisme de poignet articulé, destiné à positionner un élément de support d'outil de travail, comprenant des engrenages (26, 46 et 38, 54, 56, 94, 96, 98) destinés à réaliser le pivotement de l'élément de support d'outil de travail autour d'axes de rotation indépendants (14, 68, 82) qui présentent un point d'intersection commun (72) situé sur un élément de base (12) qui, d'une manière relative, est fixe, lequel élément de base fixe (12) renferme trois axes indépendants en rotation (14, 68, 82) présentant un point commun d'intersection (72) avec un premier (14) et un second (68) desdits axes (14, 68, 82) étant angulairement fixes l'un par rapport à l'autre, ledit premier axe (14) étant fixe par rapport audit élément de base (12), et un troisième (82) desdits axes (14, 68, 82) est mobile angulairement par rapport auxdits premier et second axes (14 et 68) et pouvant être aligné angulairement avec ledit second axe (68) tout en conservant le point commun d'intersection (72), une paire d'éléments de boîtiers (40 et 78) sont portés à rotation par l'un des axes respectifs desdits premier et second axes (14 et 68), caractérisé en ce que des dentures (54, 56), disposés sur la surface extérieure d'un arbre à manchon creux (48), sont entraînés par des moyens d'engrenage (20, 38) extérieurs à l'arbre en forme de manchon (48) en entraînent à leur tour des dentures (94, 96) qui sont disposées sur un élément creux (92) et engrènent avec une denture (98) afin de faire tourner un élément de support d'outil creux (100), et des moyens d'engrenage (16, 26, 46), disposés de manière à pouvoir tourner, à l'extérieur de l'arbre creux (48), permettent de faire tourner l'un (40) desdits éléments de boîtiers autour de leurs axes respectifs en vue de déterminer, de manière sélective, le positionnement dudit élément de support d'outil à l'intérieur d'une enveloppe à peu près hémisphérique, et en ce qu'un passage dégagé de manière continue, se trouve prévu entre l'élément de base et une surface de montage d'outil (106) sur ledit élément de support, comprenant des cavités prévues dans ledit élément de base (12), dans lesdits éléments de boîtiers (40, 78) et dans ledit élément de support d'outil (100), afin d'enfermer des organes associés à l'outil de travail.

2. Mécanisme de poignet articulé suivant la revendication 1, caractérisé en ce que l'enveloppe hémisphérique présente un extrême qui est déterminé par la différence des mesures des angles entre ledit premier axe (14) et le troisième axe (82), et un autre extrême qui est déterminé par la somme des mesures de ces angles.

3. Mécanisme de poignet articulé suivant la revendication 1 ou 2, caractérisé en ce que chacun des moyens d'engrenage (26 etc. 38 etc. 32 etc.) comporte des moyens d'entraînement d'entrée (16, 20, 18) qui s'étendent parallèlement et sont décalés radialement par rapport à l'axe (16) de l'élément fixe de base (12) et en ce qu'un élément d'engrenage (46, 54, 58) de chaque moyen d'engrenage présente un axe de rotation qui coïncide avec ledit axe (14).

## Patentansprüche

1. Mechanischer Handgelenkmechanismus zum Positionieren eines Bearbeitungswerkzeug-Halteteiles, mit Zahnradeinheiten (26, 46 und 38, 54, 56, 94, 96, 98), um eine Schwenkung des Bearbeitungswerkzeug-Halteteiles um unabhängige Drehachsen (14, 82) zu bewirken, die einen Punkt (72) gegenseitiger Überschneidung an einem relativ stationären Grundteil (12) besitzen, wobei das stationäre Grundteil (12) drei unabhängige Drehachsen (14, 68, 82) mit einem Punkt gegenseitiger Überschneidung (72) besitzt, wobei eine erste (14) une eine zweite (68) der Achsen (14, 68, 82) winkelmäßig zueinander feststehen, die erste Achse (14) relativ zum Grundteil (12) feststeht und eine dritte (82) der Achsen (14, 68, 82) winkelmäßig zu der ersten und der zweiten Achse (14 und 68) bewegbar und winkelmäßig mit der zweiten Achse (68) ausrichtbar ist unter Beibehaltung des gegenseitigen Uberschneidungspunktes (72), mit einem Paar von Gehäusmitteln (40 und 78), die drehbar an jeweils einer der ersten bzw. zweiten Achsen (14 und 68) gehaltert sind, dadurch gekennzeichnet, daß an der Außenfläche einer Hohlbüchsenwelle (48) angeordnete Zahnradmittel (54, 56) durch außerhalb zur Büchsenwelle (48) angetriebene Zahnradmittel (20, 38) angetrieben sind und wiederum an einem hohlen Teil (92) angeordnete Zahnradmittel (94, 96) antreiben und mit Zahnradmitteln (98) in Kämmeingriff sind, um eine Drehung eines hohlen Werkzeug-Halteteiles (100) zu schaffen, und daß drehbar außerhalb der Hohlwelle (48) angeordnete Zahnradmittel (16, 26, 46) für eine Drehung eines (40) der Gehäusemittel um die jeweiligen Achsen sorgen, um wahlweise die Positioneirung des Werkzeug-Halteteiles innerhalb einen im wesentlichen halbkugelförmigen Hüllfläche einzurichten, und daß ein kontinuierlich ungehinderter Durchgang vorgesehen ist zwischen dem Grundteil und einer Werkzeug-Haltefläche (106) an dem Halteteil, mit Hohlräumen in dem Grundteil (12), in den Gehäusemittel (40, 78) und in dem Werkzeug-Halteteil (100), zur umschlossenen Aufnahme der Bearbeitungswerkzeug-bezogenen Strukturen.

2. Mechanischer Handgelenkmechanismus nach Anspruch 1, dadurch gekennzeichnet, daß die halbkugelförmige Hüllfläche eine durch die Differenz des Winkelmaßes zwischen der ersten Achse (14) und der dritten Achse (82) bestimmte Extremstelle und eine andere durch die Summe der Maße dieser Winkel bestimmte Extremstelle besitzt.

3. Mechanischer Handgelenkmechansmus nach Anspruch 1 oder 2, dadurch gekennzeichnet, daß jedes der Zahnradmittel (26 usw., 38 usw., 32 usw.) Eingabeantriebsmittel (16, 20, 18) besitzt, die sich parallel zu der Achse (14) des stationären Grundteiles (12) erstrecken und radial gegen sie versetzt sind, und daß ein Zahnradteil (46, 54, 58) in jedem Zahnradmittel eine mit der Achse (14) zusammenfallende Drehachse besitzt.

Fig. 1

Fig. 2